# FASCICULE DE BREVET EUROPEEN

(11) **EP 0 806 563 B1**
(45) Date de publication et mention de la délivrance du brevet: **27.11.2002**
(21) Numéro de dépôt: 97401024.1
(22) Date de dépôt: 07.05.1997
(51) Int. Cl.: F02K 1/70

(54) **Inverseur de poussée de turboréacteur à portes munies d'aubes deflectrices**
Klappen mit Leitflächen für eine Schubumkehrvorrichtung eines Bläsertriebwerkes
Doors with deflector vanes for a thrust reverser of a turbofan engine

(30) Priorité: 09.05.1996 FR 9605763
(43) Date de publication de la demande: 12.11.1997
(73) Titulaire: Hurel-Hispano Le Havre, 76700 Gonfreville l'Orcher (FR)
(72) Inventeur: Gonidec, Patrick, 76310 Sainte Adresse (FR); Vauchel, Guy Bernard, 76610 Le Havre (FR)
(74) Mandataire: Berrou, Paul

(56) Documents cités:
- EP-A- 0 413 635

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Amont et aval sont définis par rapport au sens normal de circulation des gaz en poussée directe. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

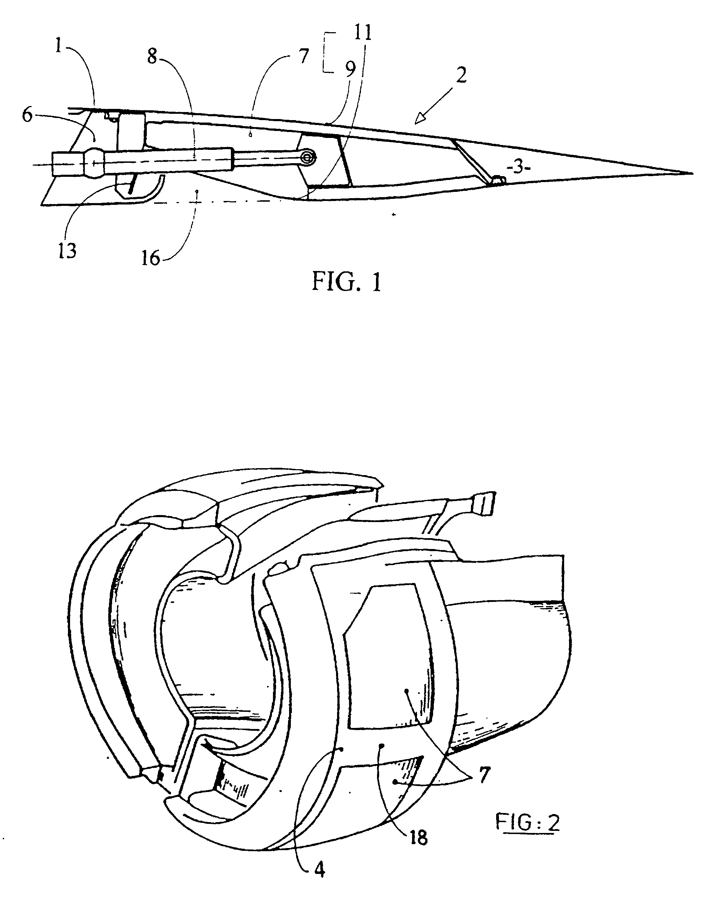

La figure 1 des dessins joints montre un exemple connu de réalisation d'un inverseur de poussée de ce type, appliqué comme le montre la vue schématique partielle en perspective de la figure 2, à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur en amont des portes, par une partie amont 1 en aval des portes par une partie aval 3 et entre les portes 7 par l'intermédiaire de poutres 18 qui relient la partie aval 3 du capotage extérieur à la partie amont 4 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 8.

En position activée, les portes 7 basculent de telle façon que la partie des portes situées en aval des pivots, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.

Des exemples connus de réalisation sont illustrés par exemple par FR 1 482 538 ou par FR-A-2 030 034.

Il existe aussi des dispositifs tels que celui décrit par US 3 605 411 qui permettent d'avoir une saillie de becquet vers l'amont lorsque les portes sont déployées tout en permettant une continuité de la paroi externe du conduit lorsque les portes ne sont pas déployées. On connaît également par FR-A-2 618 853 un dispositif où le becquet est escamoté en jet direct de façon à optimiser les performances du moteur.

Dans certaines applications, comme représenté sur la figure 1, les becquets 13 font saillie par rapport à la face interne 11 des portes 7, même en jet direct sans pour autant faire saillie dans le conduit qui est dans cet exemple muni de cavités 16 légèrement préjudiciables aux performances du moteur alors que le dispositif d'inversion devient extrêmement simple.

La combinaison des becquets et des bords de déviation permettent également d'optimiser la direction d'éjection du flux comme indiqué par FR-A-2 680 547 ou par EP-A-413 635.

Enfin la commande des portes d'une position à une autre par vérin est connue en soi, nous noterons cependant la solution très simple où il y a un vérin par porte fixé dans sa partie amont à la structure fixe amont du capotage extérieur, et dans sa partie aval à la porte en un point situé dans la partie amont comme décrit par exemple par FR 1 482 538.

Le type d'inverseur de poussée décrit ci-dessus a l'inconvénient majeur que, pour des raisons imposées par des contraintes de dimensionnement aérodynamique du passage du flux dans les passages dégagés par la partie amont de ces portes, la pression du conduit exerce sur ces portes une action qui tend à les ouvrir, en effet, la section totale de ces passages doit être supérieure à la section du conduit dans un plan situé en amont des portes, ceci à cause des pertes en charge engendrées par la déviation du flux, ceci dans le cas où la section de fuite (partie aval du conduit non obstruée par la partie aval des portes), est minimisée de façon à obtenir une contre poussée convenable.

L'inconvénient majeur décrit ci-dessus se traduit suivant les deux aspects suivants :
- le fait que les portes tendent à s'ouvrir est un inconvénient du point de vue de la sécurité. Des portes sur lesquelles l'action de la pression tendrait à les maintenir fermées (non déployées), rendrait le dispositif plus sûr, de même que des portes sur lesquelles l'action de la pression tendrait à les refermer lorsque celles-ci sont dans une position telle que la poussée n'est pas encore inversée, même si elle est partiellement détruite (nous reviendrons sur ce dernier point)
- l'action de la pression sur les portes est dans certains exemples connus telle que dans certains cas à prendre en compte dans le dimensionnement de l'inverseur, des efforts très importants transitent dans les vérins entre leurs points d'attache sur la partie amont de la structure fixe et sur les portes. Il en résulte une masse importante de la structure, du système de commande des portes et de verrouillage de celles-ci, et des portes elles-mêmes.

L'objet de l'invention est de proposer un moyen qui permet d'accroître la sécurité et/ou d'améliorer les performances en jet direct ou en jet inversé.
Les buts sont atteints conformément à l'invention par un inverseur de poussée à portes pivotantes du type précité caractérisé en ce que chaque porte supporte au moins une aube déflectrice à profil aérodynamique en forme d'aile, disposée au contact du flux circulant dans le canal annulaire de manière que le flux exerce une action sur ladite aube tendant à maintenir la porte dans sa position fermée en jet direct. D'autres caractéristiques et avantages de l'invention seront mieux compris à la lecture de la description qui va suivre d'un mode de réalisation de l'invention, en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermées, d'un type connu et qui a fait précédemment l'objet d'une description ;
- la figure 2 représente une vue schématique en perspective d'un inverseur de poussée du type précité montré en position monté et avec les portes fermées ;
- la figure 3 représente, dans une vue analogue à celle de la figure 1, un inverseur de poussée à portes pivotantes en position jet direct, selon un premier mode de réalisation de l'invention ;
- la figure 4 représente, le principe défini sur la figure 3 en position jet inversé ;
- la figure 5 représente, dans une vue analogue à celle de la figure 1, un inverseur de poussée à portes pivotantes en position jet direct, selon un deuxième mode de réalisation de l'invention ;
- la figure 6 représente, le principe défini sur la figure 5 en position jet inversé ;
- la figure 7 représente, dans une vue analogue à celle de la figure 1, un inverseur de poussée à portes pivotantes en position jet direct, selon un troisième mode de réalisation de l'invention ;
- la figure 8 représente, le principe défini sur la figure 7 en position jet inversé ;
- la figure 9 représente, dans une vue analogue à celle de la figure 1, un inverseur de poussée à portes pivotantes en position jet direct, selon un quatrième mode de réalisation de l'invention ;
- la figure 10 représente, le principe défini sur la figure 9 en position jet inversé ;
- la figure 11 représente, dans une vue analogue à celle de la figure 1, un inverseur de poussée à portes pivotantes en position jet direct, selon une variante du quatrième mode de réalisation de l'invention ;
- la figure 12 représente, dans une vue analogue à celle de la figure 1, un inverseur de poussée à portes pivotantes en position jet direct, selon un cinquième mode de réalisation de l'invention
- la figure 13 représente le principe défini sur la figure 12 en position jet inversé ;
- la figure 14 représente une vue dans l'axe du moteur de l'inverseur de poussée représenté sur la figure 3 ;
- les figures 15 et 16 représentent une variante du premier mode de réalisation de l'invention représenté sur les figure 3 et 4 ;
- les figures 17 et 18 représentent une variante du troisième mode de réalisation de l'invention représenté sur les figures 7 et 8 ;
- les figures 19 à 22 représentent, d'autres possibilités de courbure d'aube, vues dans l'axe du moteur ;
- la figure 23 représente une variante du troisième mode de réalisation de l'invention représenté sur les figures 7 et 8 ;
- les figures 24 à 28 représentent des exemples de découpes amont et aval des aubes;
- les figures 29 et 30 représentent un mode de réalisation de l'invention appliqué à un inverseur de poussée à obstacles aval.

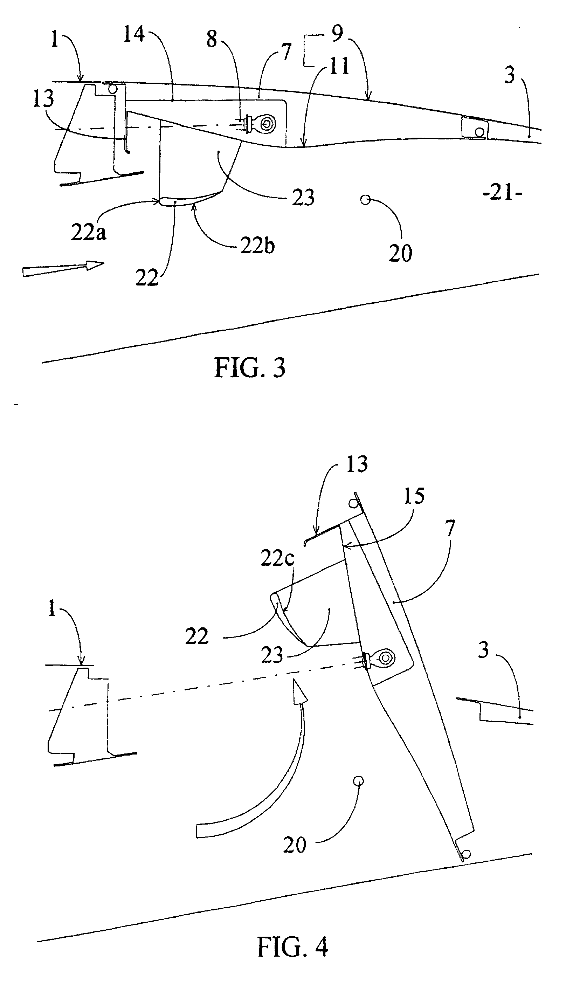

Selon un premier mode de réalisation de l'invention représenté sur les figures 3 et 4, un inverseur de poussée susceptible d'effectuer dans les phases de vol pertinentes d'un avion une inversion de flux du turboréacteur associé comporte les parties principales connues et précédemment décrites dans un exemple connu de réalisation, en référence aux figures 1 et 2. On retrouve notamment la structure fixe amont 1, les portes 7 comportant la partie extérieure 9, la partie intérieure 11, un becquet 13 et associées à un vérin de commande 8, et la partie aval 3.

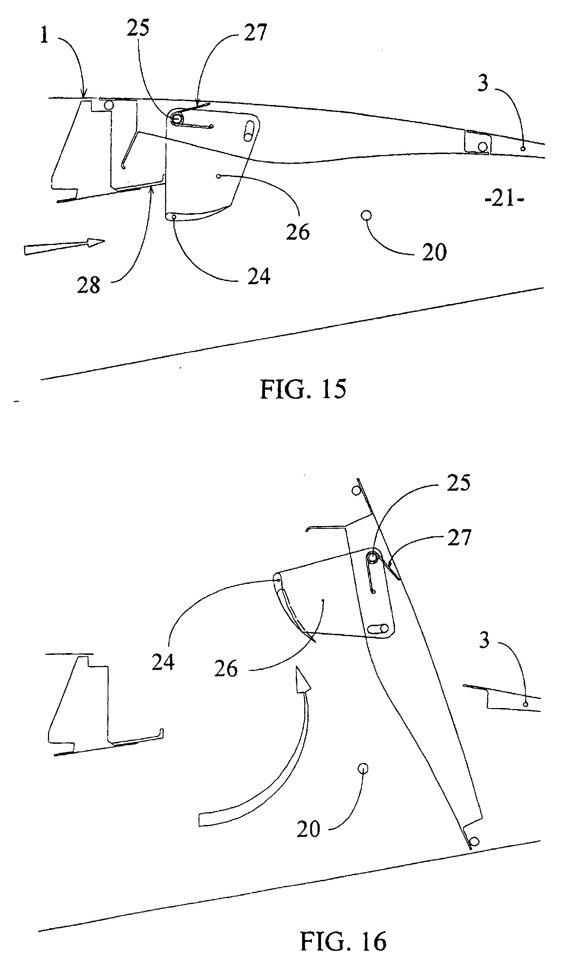

De manière remarquable et conforme à l'invention, chaque porte 7 supporte dans sa partie amont au niveau de la cavité de porte, une aube 22 à profil aérodynamique adapté à sa fonction qui sera précisée plus loin et notamment en forme d'aile. Dans cet exemple, le bord d'attaque 22a de l'aube 22 est placé du côté amont et l'aube 22 est disposée dans le canal annulaire 21, en position radialement intermédiaire, entre les parois interne et externe délimitant la veine. L'aube 22 a dans ce cas son côté extrados 22b tourné vers la paroi interne de veine dans le canal annulaire 21. L'aube 22 est suspendue par des parois latérales 23 à la partie amont de la porte 7 au niveau de la cavité de porte. Les parois latérales 23 peuvent en plus réaliser une partie ou la totalité des becquets latéraux de porte. La figure 14 montre la disposition dans le cas où l'inverseur de poussée comporte quatre portes.

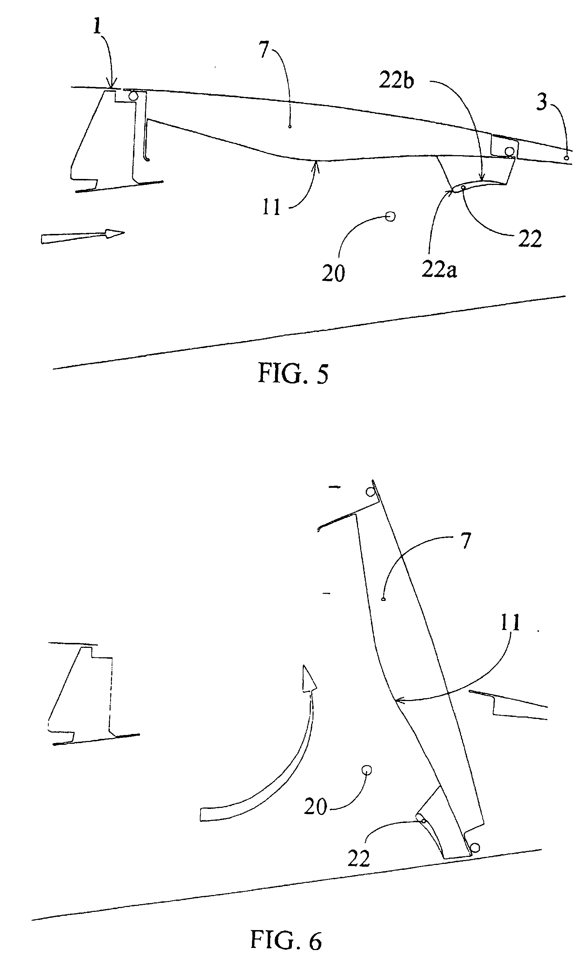

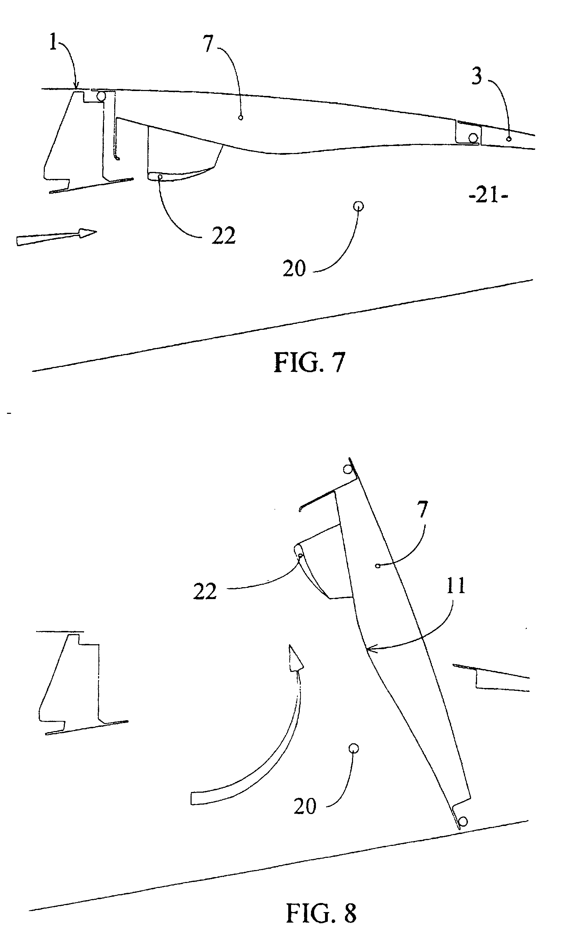

Les parois latérales 23 forment également un profil aérodynamique adapté de manière à minimiser la traînée. La définition de l'aube 22, notamment sa longueur, sa forme et son épaisseur, son positionnement sur la porte 7 et dans le canal annulaire 21 et l'orientation de l'aube 22 sont tels que l'action du flux en position de jet direct telle que représentée sur la figure 3 tende à maintenir la porte 7 dans le sens de l'auto-fermeture, soit dans une position équilibrée inactive, soit dans une position de légère ouverture insusceptible de gêner la pilotabilité de l'avion, dans le cas où un déploiement intempestif apparaîtrait par suite des défaillances diverses des sécurités prévues.
En position de jet inversé, comme représenté sur la figure 4, le profil d'intrados 22c, en fonction de l'orientation et de la forme de l'aube 22, en association avec le fond 15 de la cavité de la porte 7, permet une aide à l'écoulement du flux vers le déflecteur 13 de porte, améliorant ainsi le guidage des nappes-du flux inversé vers l'amont de la nacelle, de manière à assurer les performances d'inversion de poussée recherchées. Les parois 23 de support de l'aube 22 peuvent en outre assurer une fonction de déflecteurs latéraux associés à la porte 7.
Dans l'exemple de réalisation représenté sur les figures 3 et 4 où le vérin 8 de commande des déplacements de la porte 7 est situé dans l'axe de ladite porte 7 et logé dans un tunnel 14, l'aube 22 est en deux parties positionnées de chaque côté dudit tunnel 14. Au cas où un moyen de commande est disposé en dehors du passage formé dans le capotage extérieur et constituant le puits d'inversion, l'aube 22 peut être en une seule partie, disposée d'un bord latéral de la porte 7 à l'autre.
Selon un deuxième mode de réalisation de l'invention, représenté sur les figures 5 et 6, l'aube 22 est montée en aval de la porte 7, dans une zone comprise entre le point pivot 20 de la porte 7 et l'extrémité aval de la porte. Dans ce cas, le côté extrados 22b de l'aube 22 est tourné vers la partie interne 11 de la porte 7 et le bord d'attaque 22a de l'aube 22 est placé du côté amont. L'aube 22 est réalisée en une seule partie dans cette position et se trouve, lors du fonctionnement en inversion de poussée représenté sur la figure 6, dans la zone de recirculation d'air, sans influence notable sur les effets d'inversion.
Selon un troisième mode de réalisation de l'invention, représenté sur les figures 7 et 8, l'aube 22 est installée à la limite de la ligne aérodynamique suivant la paroi externe du canal annulaire 21 et la surface interne de la partie intérieure 11 de la porte 7. En position de jet direct, représentée sur la figure 7, l'aube 22 constitue dans ce cas un générateur de dépression locale qui tend à rééquilibrer la porte 7 dans le sens de l'auto-fermeture. Cette action est renforcée grâce à un débordement approprié de l'aube 22 dans la veine de circulation du flux dans le canal annulaire 21 qui permet audit flux d'exercer sur l'aube 22 une action tendant à maintenir la porte 7 dans le sens de la fermeture.

En variante, le bord d'attaque de l'aube 22 peut être placé du côté aval de manière à améliorer le guidage du flux inversé sur la paroi interne de porte lors du fonctionnement en inversion de poussée.

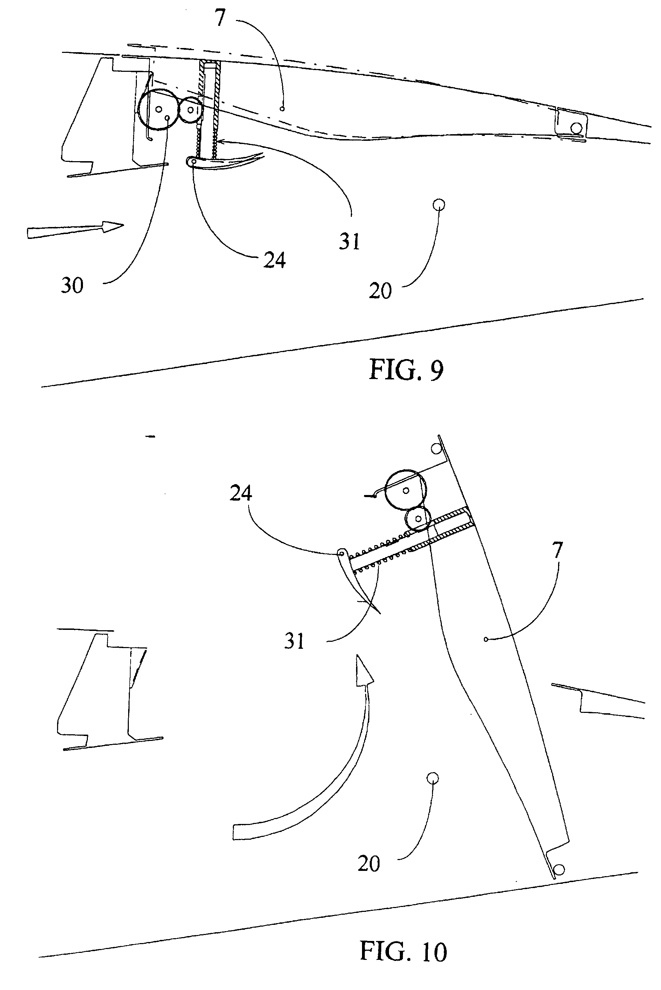

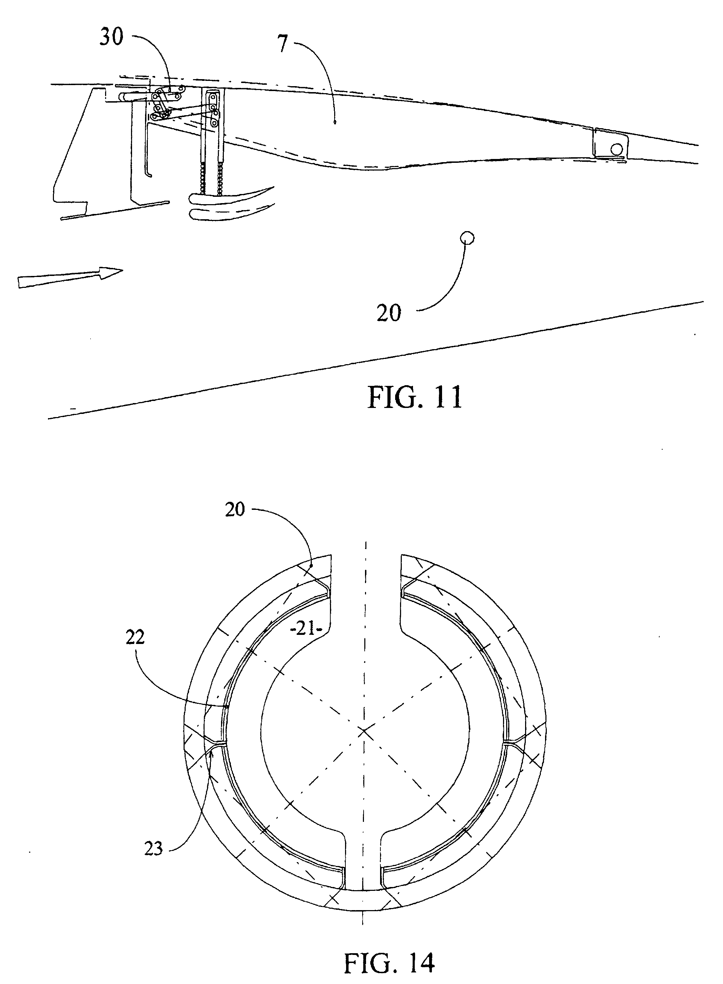

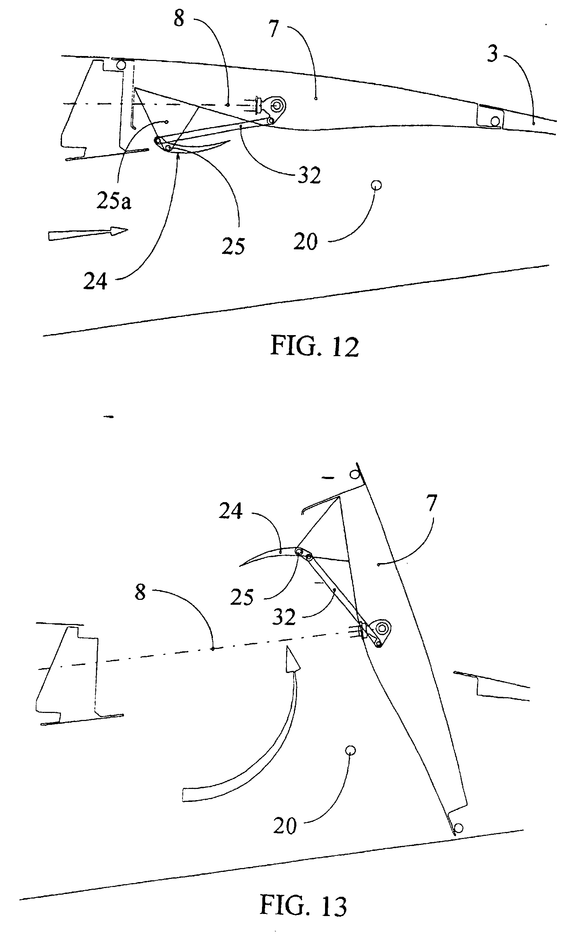

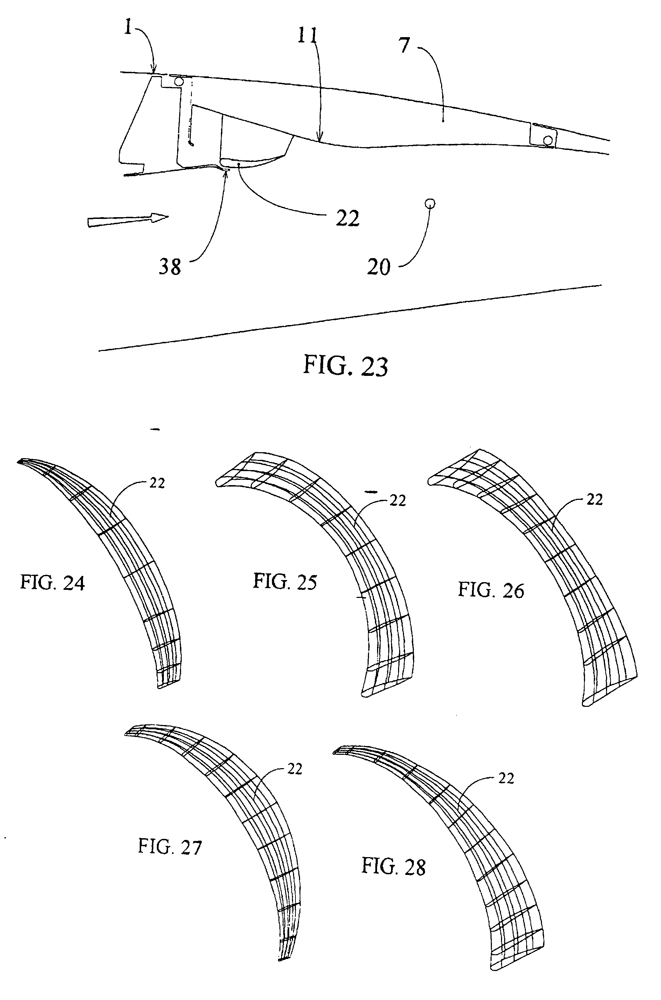

Selon une variante représentée sur la figure 23, le bord amont de l'aube 22 peut être recouvert par un léger débordement 38 du bord de déviation de l'inverseur de manière à améliorer en jet direct l'effet de dépression dans la cavité de la porte 7.
Au lieu de rester fixe, comme dans les trois modes de réalisation de l'invention qui viennent d'être décrits, l'aube 22, en fonction des résultats recherchés dans les applications particulières, peut être rendue mobile. A partir du troisième mode de réalisation précédemment décrit en référence aux figures 7 et 8, selon un quatrième mode de réalisation de l'invention, représenté sur les figures 9 et 10, un système mécanique 30 de manoeuvre est adjoint à l'aube 24. Le système mécanique 30 est constitué par tout moyen connu en soi permettant d'asservir le déplacement de l'aube 24 à celui de la porte 7. Dans l'exemple représenté sur les figures 9 et 10, le système mécanique 30 est du type à pignons et crémaillère et le dispositif est complété par un ressort 31 qui permet de garder l'aube 24 en position quand la porte 7 est ouverte, telle que représentée sur la figure 10. Comme représenté en traits mixtes sur la figure 9, dès que la porte 7 commence à s'ouvrir, notamment dans le cas d'un déploiement intempestif, l'aube 24 est ressortie dans la veine dans une position telle que le maintien de la porte 7 est assuré jusqu'à une position d'équilibre n'occasionnant pas de gène excessive pour la pilotabilité de l'avion. Le déplacement de l'aube mobile 24 est guidé par un ou plusieurs coulisseaux, de manière comme en soi et en fonction des effets recherchés, une loi de déplacement déterminée est obtenue grâce au système mécanique d'entraînement 30, suivant la cinématique imposée. Un autre exemple de moyen utilisable, par bielles, pour constituer le système mécanique 30 d'entraînement de l'aube 24 est représenté sur la figure 11. Le déplacement de l'aube 24 peut être réalisé suivant une direction perpendiculaire à la porte 7 comme représenté sur les figures, mais aussi suivant une direction oblique vers l'amont ou l'aval selon le but recherché.
Selon un cinquième mode de réalisation représenté sur les figures 12 et 13, une aube mobile 24 est articulée sur un pivot 25 solidarisé par un support 25a à la porte 7. Le pivot 25 occupe une position intermédiaire entre bord amont et bord aval de l'aube 24. Un système de bielles 32 relie l'aube 24 à l'articulation d'extrémité de la tige du vérin de commande 8 sur la porte 7. De cette manière, lors du déplacement de la porte 7, l'aube 24 pivote autour de son pivot 25 et prend une position telle que représentée sur la figure 13 permettant une orientation du flux inversé vers une direction amont. L'aube pivotante 24, notamment lorsqu'elle est placée à l'extrémité amont de la porte 7, associée à un bord de déviation adapté de la structure fixe 1, remplit la fonction de déflection d'un becquet de porte.

A partir du premier mode de réalisation précédemment décrit en référence aux figures 3 et 4, il est également possible d'aménager le montage de l'aube 24 pour la rendre mobile, comme représenté sur les figures 15 et 16.

Un pivot 25 est dans ce cas disposé sur les parois latérales 26 de support de l'aube 24, en un point intermédiaire entre le bord amont et le bord aval. Un système de rappel automatique tel qu'un ressort de torsion 27 permet le maintien en position de l'aube 24. En position de jet direct, une ou plusieurs butée(s) 28 solidaire(s) de la structure fixe amont 1 de l'inverseur permet d'ajuster la position optimale de l'aube 24 par réglage de la butée. Un pilotage optimal des nappes du flux inversé est obtenu, comme représenté sur la figure 16 en assurant une convergence entre les deux profils en opposition de l'aube 24 et le fond de porte.

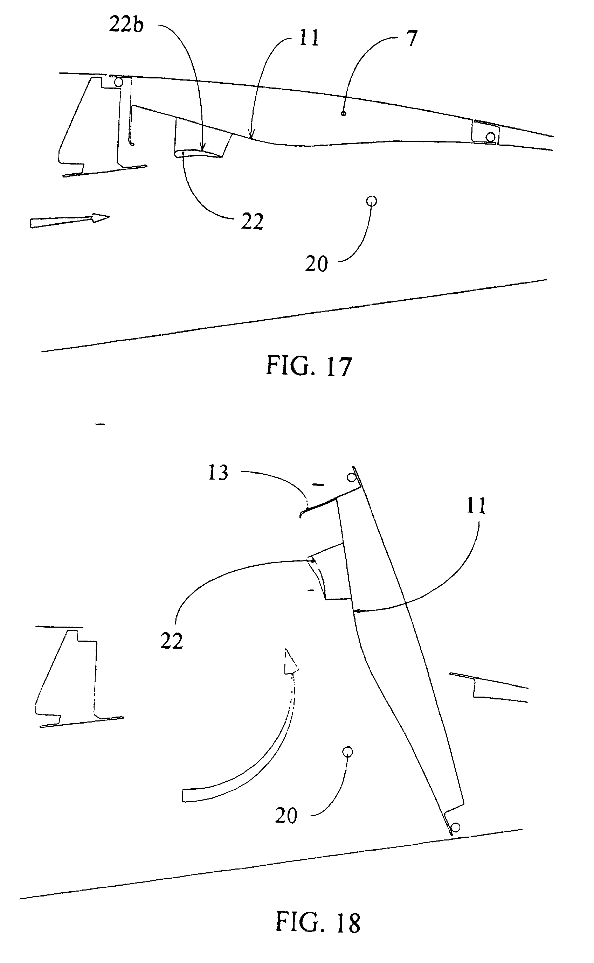

Selon une variante de réalisation représentée sur les figures 17 et 18, une aube 22 située dans la cavité de porte présente un côté extrados 22b tourné vers la partie interne 11 de la porte 7 et le bord d'attaque 22a de l'aube 22 est placé du côté amont. De cette manière, en position d'inversion de flux, comme représentée sur la figure 18, l'aube 22 canalise une partie du flux en direction du déflecteur 13 de manière à améliorer l'efficacité du jet vers l'amont et assurer les performances d'inversion de poussée recherchées. Le bord d'attaque 22a, en variante, peut en outre être disposé du côté aval.

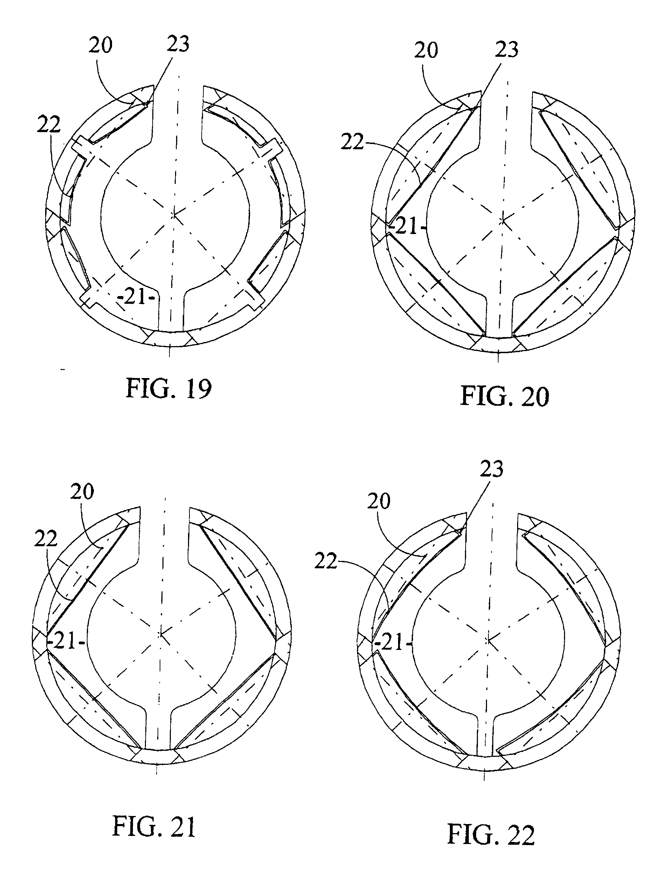

En fonction des applications particulières, une optimisation du pilotage des nappes du flux inversé peut être obtenue en faisant varier divers paramètres et notamment :
- les courbures des aubes qu'elles soient fixes 22 ou mobiles 24 peuvent être par rapport à l'axe moteur, positives, comme représentées sur la figure 19, négatives, comme représentées sur la figure 20, nulles, comme représentées sur la figure 21, avec ou sans parois latérales 23 ;
- l'aube peut être disposée sur toute la largeur de la porte 7 comme indiqué sur la figure 20 ou uniquement sur une partie de la porte 7, comme indiqué sur la figure 19 ;
- l'aube peut être dissymétrique soit par rapport à la veine, comme représentée sur la figure 22, soit dans le sens de l'axe transversal du moteur ;
- les découpes amont et/ou aval des aubes peuvent être ajustées, comme dans les exemples représentés sur les figures 24 à 28.

On note en outre que certaines variantes précédemment décrites peuvent être utilisées seules ou être associées dans la réalisation d'un inverseur de poussée conforme à l'invention. Par exemple, une porte 7 peut être munie à la fois d'une aube à la hauteur de la cavité de porte et d'une aube dans la zone aval.

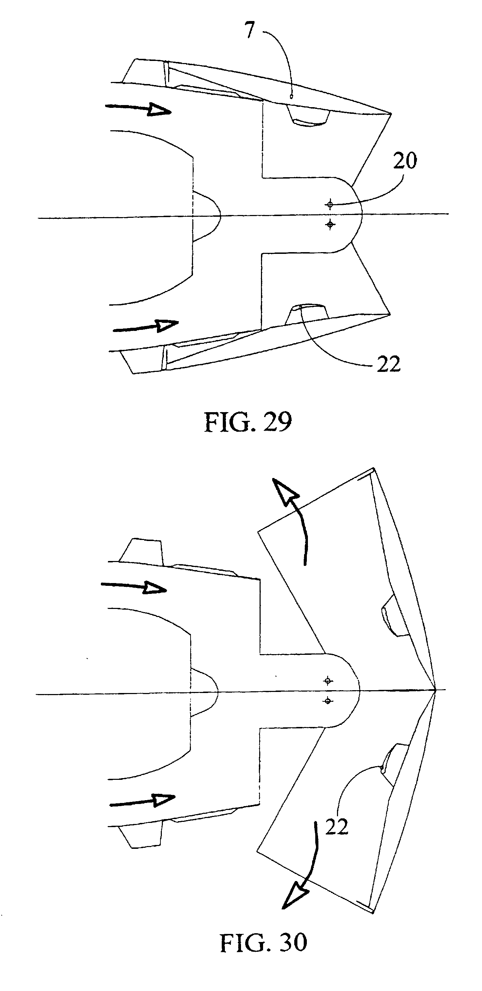

Selon un autre mode de réalisation schématiquement représenté sur les figures 29 et 30, les éléments 7 constituent des obstacles aval dans la position d'inversion de poussée représentée sur la figure 30 après pivotement autour des pivots 20. Conformément à l'invention, une aube 22 à profil aérodynamique est fixée sur la face interne de l'élément 7. Dans cette application les aubes 22 peuvent en outre remplir un rôle de protection thermique lors de l'inversion de flux lorsqu'elles sont placées dans le prolongement du flux primaire du turboréacteur.

## Revendications

1. Inverseur de poussée de turboréacteur à double flux comportant des portes pivotantes (7), susceptibles, en position fermée, lors d'un fonctionnement en jet direct, de s'intégrer dans la paroi extérieure du canal annulaire (21) formant le conduit de flux en arrière de la soufflante de turboréacteur, et susceptibles en outre chacune de pivoter sous l'action d'un moyen de commande (8) des déplacements de manière à constituer des obstacles de déviation de flux lors d'un fonctionnement en inversion de poussée **caractérisé en ce que** chaque porte (7) supporte au moins une aube (22 ; 24) déflectrice à profil aérodynamique en forme d'aile, disposée au contact du flux circulant dans ledit canal annulaire (21) de manière que le flux exerce une action sur ladite aube (22 ; 24) tendant à maintenir la porte (7) dans sa position fermée en jet direct.

2. Inverseur de poussée de turboréacteur à double flux selon la revendication 1 dans lequel ladite aube déflectrice (22) a une position fixe déterminée par rapport à la porte (7).

3. Inverseur de poussée de turboréacteur à double flux selon la revendication 2 dans lequel l'aube (22) est disposée dans le canal annulaire (21), en position radialement intermédiaire entre les parois interne et externe délimitant la veine et est suspendue par des parois latérales (23) formant un profil aérodynamique à la partie amont de la porte (7), au niveau de la cavité de porte.

4. Inverseur de poussée de turboréacteur à double flux selon la revendication 2 dans lequel l'aube (22) est disposée dans le canal annulaire (21), en position radialement intermédiaire entre les parois interne et externe délimitant la veine et est suspendue par des parois latérales (23) formant un profil aérodynamique à la partie aval de la porte (7), dans une zone comprise entre le point pivot (20) de la porte (7) et l'extrémité aval de ladite porte .

5. Inverseur de poussée de turboréacteur à double flux selon la revendication 2 dans lequel l'aube (22) est installée à la limite de la ligne aérodynamique suivant la paroi externe du canal annulaire (21) et la surface interne de la partie intérieure (11) de la porte (7) et est suspendue par des parois latérales formant un profil aérodynamique à la partie amont de la porte (7), au niveau de la cavité de porte.

6. Inverseur de poussée de turboréacteur à double flux selon la revendication 5 dans lequel le bord amont de l'aube (22) est recouvert par un léger débordement (38) du bord de déviation solidaire de la partie fixe amont (1) de l'inverseur.

7. Inverseur de poussée de turboréacteur à double flux selon la revendication 1 dans lequel ladite aube déflectrice (24) est mobile et a une position variable et réglable par rapport à la porte (7).

8. Inverseur de poussée de turboréacteur à double flux selon la revendication 7 dans lequel un système mécanique (30) associé à l'aube déflectrice (24) assure un déplacement de l'aube (24) dans le canal annulaire (21).

9. Inverseur de poussée de turboréacteur à double flux selon la revendication 8 dans lequel ledit système mécanique (30) comporte des pignons et une crémaillère associés à un ressort de rappel (31) et assure un déplacement de l'aube (24) suivant une direction perpendiculaire à la porte (7), l'aube (24) étant guidée par coulisseau solidaire de la porte (7).

10. Inverseur de poussée de turboréacteur à double flux selon la revendication 8 dans lequel ledit système mécanique (30) comporte un ensemble de bielles associé à un ressort de rappel assurant le déplacement de l'aube (24) suivant une direction perpendiculaire à la porte (7), l'aube (24) étant guidée par coulisseau solidaire de la porte (7).

11. Inverseur de poussée de turboréacteur à double flux selon la revendication 8 dans lequel ladite aube mobile (24) est articulée sur un pivot (25) solidarisé par un support (25a) à la porte (7) et est relié par un système de bielles (32) à l'articulation d'extrémité de la tige du vérin de commande (8) sur la porte (7) de manière que lors du déplacement de la porte (7), l'aube (24) pivote autour de son pivot (25) de façon à orienter le flux inversé vers une direction amont.

12. Inverseur de poussée de turboréacteur à double flux selon la revendication 8 dans lequel les parois latérales de support (26) reliant l'aube (24) à la porte (7) sont montées sur un pivot (25) situé en un point intermédiaire entre le bord amont et le bord aval et associé à un moyen mécanique de rappel automatique (27).

13. Inverseur de poussée de turboréacteur à double flux selon l'une quelconque des revendications 1 à 12 dans lequel le côté extrados (22b) de l'aube (22 ; 24) est tourné vers la partie intérieure (11) de la porte (7).

14. Inverseur de poussée de turboréacteur à double flux selon l'une quelconque des revendications 1 à 12dans lequel le côté extrados (22b) de l'aube (22 ; 24) est tourné vers la paroi radialement intérieure du canal annulaire (21).

15. Inverseur de poussée de turboréacteur à double flux selon l'une des revendications 13 ou 14 dans lequel le bord d'attaque (22a) de l'aube (22 ; 24) est situé du côté amont.

16. Inverseur de poussée de turboréacteur à double flux selon l'une des revendications 13 ou 14 dans lequel le bord d'attaque (22a) de l'aube (22 ; 24) est situé du côté aval.

17. Inverseur de poussée de turboréacteur selon la revendication 1 dans lequel les portes (7) sont disposées à l'extrémité aval du conduit de flux et constituent des obstacles aval lors du fonctionnement en inversion de poussée, au moins une aube déflectrice (22) à profil aérodynamique en forme d'aile étant fixée sur la face interne dudit obstacle aval (7).

## Patentansprüche

1. Schubumkehrvorrichtung für ein Zweikreis-Turbostrahltriebwerk mit schwenkbaren Klappen (7), die sich in Schließstellung im Direktstrahlbetrieb in die Aussenwand des ringförmigen Kanals, der die Strömungsleitung hinter dem Bläser des Turbostrahltriebwerks bildet, einfügen können und unter der Einwirkung einer Stellantriebsvorrichtung so verschwenkbar sind, daß sie im Schubumkehrbetrieb Hindernisse zum Ablenken der Strömung bilden,
**dadurch gekennzeichnet,**
**daß** jede Klappe (7) wenigstens eine Leitschaufel (22; 24) mit einem flügelförmigen aerodynamischern Profil trägt, die im Kontakt mit der in dem ringförmigen Kanal (21) zirkulierenden Strömung so angeordnet ist, daß die Strömung auf diese Schaufel (22; 24) eine Wirkung ausübt, die dazu tendiert, die Klappe (7) im Direktstrahlbetrieb in ihrer Schließstellung zu halten.

2. Schubumkehrvorrichtung für ein Zweikreis-Turbostrahltriebwerk nach Anspruch 1, bei der die Leitschaufel (22) eine feste Position hat, die relativ zu der Klappe (7) festgelegt ist.

3. Schubumkehrvorrichtung für ein Zweikreis-Turbostrahltriebwerk nach Anspruch 2, bei der die Schaufel (22) in dem ringförmigen Kanal (21) in einer Position radial zwischen der Aussenwand und der Innenwand, die den Strahl begrenzen, angeordnet ist und in Höhe des Klappenhohlraums an Seitenwänden (23) aufgehängt ist, die auf der stromaufwärtigen Seite der Klappe (7) ein aerodynamisches Profil bilden.

4. Schubumkehrvorrichtung für ein Zweikreis-Turbostrahltriebwerk nach Anspruch 2, bei der die Schaufel (22) in dem ringförmigen Kanal (21) in einer Position radial zwischen der Aussenwand und der Innenwand, die den Strahl begrenzen, angeordnet ist und in einer Zone zwischen der Gelenkstelle (20) der Klappe (7) und dem stromabwärtigen Endbereich dieser Klappe an Seitenwänden (23) aufgehängt ist, die auf der stromaufwärtigen Seite der Klappe (7) ein aerodynamisches Profil bilden.

5. Schubumkehrvorrichtung für ein Zweikreis-Turbostrahltriebwerk nach Anspruch 2, bei der die Schaufel (22) an der Grenze der der Aussenwand des ringförmigen Kanals (21) und der Innenfläche des inneren Teils (11) der Klappe (7) folgenden Linie installiert ist und in Höhe des Klappenhohlraums an Seitenwänden aufgehängt ist, die auf der stromaufwärtigen Seite der Klappe (7) ein aerodynamisches Profil bilden.

6. Schubumkehrvorrichtung für ein Zweikreis-Turbostrahltriebwerk nach Anspruch 5, bei der der stromaufwärtige Rand der Schaufel (22) von einem leichten Überstand (38) der mit dem festen stromaufwärtigen Teil (1) der Schubumkehrvorrichtung fest verbundenen Ablenkkante überdeckt wird.

7. Schubumkehrvorrichtung für ein Zweikreis-Turbostrahltriebwerk nach Anspruch 1, bei der die Leitschaufel (24) beweglich ist und eine relativ zu der Klappe (7) variable und regelbare Position hat.

8. Schubumkehrvorrichtung für ein Zweikreis-Turbostrahltriebwerk nach Anspruch 7, bei der ein der Leitschaufel (24) zugeordnetes mechanisches System (30) eine Verstellung der Schaufel (24) in dem ringförmigen Kanal (21) ermöglicht.

9. Schubumkehrvorrichtung für ein Zweikreis-Turbostrahltriebwerk nach Anspruch 8, bei der das mechanische System (30) Zahnräder und eine Zahnstange umfaßt, die mit einer Rückholfeder (31) verbunden sind, und eine Verstellung der Schaufel (24) in einer zu der Klappe (7) orthogonalen Richtung ermöglicht, wobei die Schaufel (24) von einer mit der Klappe (7) fest verbundenen Gleitführung geführt wird.

10. Schubumkehrvorrichtung für ein Zweikreis-Turbostrahltriebwerk nach Anspruch 8, bei der das mechanische System (30) eine mit einer Rückholfeder verbundene Pleuelanordnung aufweist, die eine Verstellung der Schaufel (24) in einer zu der Klappe (7) orthogonalen Richtung ermöglicht, wobei die Schaufel (24) von einer mit der Klappe (7) fest verbundenen Gleitführung geführt wird.

11. Schubumkehrvorrichtung für ein Zweikreis-Turbostrahltriebwerk nach Anspruch 8, bei der die verstellbare Schaufel (24) an einem über ein Trägerteil (25a) fest mit der Kanal (7) verbundenen Gelenkzapfen (25) gelenkig gelagert ist und über ein Pleuelsystem (32) mit dem Endgelenk der Stange des Antriebszylinders (8) mit der Kanal (7) so verbunden ist, daß die Schaufel (24) bei einer Verstellung der Klappe (7) so um ihren Gelenkzapfen (25) verschwenkt wird, daß sie die Umkehrströmung in eine stromaufwärtige Richtung ausrichtet.

12. Schubumkehrvorrichtung für ein Zweikreis-Turbostrahltriebwerk nach Anspruch 8, bei der die tragenden Seitenwände (26), die die Schaufel (24) mit der Klappe (7) verbinden, an einem Gelenkzapfen (25) montiert sind, der in einem Punkt zwischen dem stromaufwärtigen Rand und dem stromabwärtigen Rand liegt und dem ein automatisches mechanisches Rückholmittel (27) zugeordnet ist.

13. Schubumkehrvorrichtung für ein Zweikreis-Turbostrahltriebwerk nach einem der Ansprüche 1 bis 12, bei der die äußere Wölbungsfläche (22b) der Schaufel (22; 24) dem inneren Teil (11) der Klappe (7) zugewandt ist.

14. Schubumkehrvorrichtung für ein Zweikreis-Turbostrahltriebwerk nach einem der Ansprüche 1 bis 12, bei der die äußere Wölbungsfläche (22b) der Schaufel (22; 24) der radial inneren Wand des ringförmigen Kanals (21) zugewandt ist.

15. Schubumkehrvorrichtung für ein Zweikreis-Turbostrahltriebwerk nach einem der Ansprüche 13 oder 14, bei der die Vorderkante (22a) der Schaufel (22; 24) auf der stromaufwärtigen Seite liegt

16. Schubumkehrvorrichtung für ein Zweikreis-Turbostrahltriebwerk nach einem der Ansprüche 13 oder 14, bei der die Vorderkante (22a) der Schaufel (22; 24) auf der stromabwärtigen Seite liegt

17. Schubumkehrvorrichtung für ein Zweikreis-Turbostrahltriebwerk nach Anspruch 1, bei der die Klappen (7) in dem stromabwärtigen Endbereich der Strömungsleitung angeordnet sind und im Schubumkehrbetrieb stromabwärtige Hindernisse bilden, wobei an der Innenseite des stromabwärtigen Hindernisses (7) wenigstens eine Leitschaufel (22) mit einem flügelförmigen aerodynamischem Profil in Flügelform befestigt ist.

## Claims

1. Thrust reverser for a bypass turbojet engine comprising pivoting doors (7) capable, in the closed position, when operating in direct jet mode, of being incorporated into the outer wall of the annular duct (21) forming the flow duct behind the turbojet fan, and also each capable of pivoting under the action of a movement-control means (8) so as to form obstacles deflecting the flow when operating in reverse thrust mode, **characterized in that** each door (7) supports at least one deflector vane (22; 24) with wing-shaped aerodynamic profile, arranged in contact with the flow flowing in the said annular duct (21) so that the flow exerts an action on said vane (22; 24) tending to keep the door (7) in its closed position in direct jet mode.

2. Thrust reverser for a bypass turbojet engine according to Claim 1, in which the said deflector vane (22) has a determined fixed position with respect to the door (7).

3. Thrust reverser for a bypass turbojet engine according to Claim 2, in which the vane (22) is arranged in the annular duct (21) in a radially intermediate position between the inner and outer walls delimiting the airflow and is suspended by lateral walls (23) forming an aerodynamic profile from the upstream part of the door (7) at the door cavity.

4. Thrust reverser for a bypass turbojet engine according to Claim 2, in which the vane (22) is arranged in the annular duct (21) in a radially intermediate position between the inner and outer walls delimiting the airflow and is suspended by lateral walls (23) forming an aerodynamic profile from the downstream part of the door (7) in a region lying between the pivot point (20) for the door (7) and the downstream end of the said door.

5. Thrust reverser for a bypass turbojet engine according to Claim 2, in which the vane (22) is installed at the limit of the aerodynamic line along the outer wall of the annular duct (21) and the inner surface of the interior part (11) of the door (7) and is suspended by lateral walls forming an aerodynamic profile from the upstream part of the door (7) at the door cavity.

6. Thrust reverser for a bypass turbojet engine according to Claim 5, in which the upstream edge of the vane (22) is covered by a slight protrusion (38) of the deflection edge secured to the upstream fixed part (1) of the reverser.

7. Thrust reverser for a bypass turbojet engine according to Claim 1, in which the said deflector vane (24) can move and has a position that can be varied and adjusted with respect to the door (7).

8. Thrust reverser for a bypass turbojet engine according to Claim 7, in which a mechanical system (30) associated with the deflector vane (24) moves the vane (24) in the annular duct (21).

9. Thrust reverser for a bypass turbojet engine according to Claim 8, in which the said mechanical system (30) comprises pinions and a rack which are associated with a return spring (31) and effects movement of the vane (24) in a direction perpendicular to the door (7), the vane (24) being guided by a slide secured to the door (7).

10. Thrust reverser for a bypass turbojet engine according to Claim 8, in which the said mechanical system (30) comprises a set of link rods associated with a return spring affording the movement of the vane (24) in a direction perpendicular to the door (7), the vane (24) being guided by a slide secured to the door (7).

11. Thrust reverser for a bypass turbojet engine according to Claim 8, in which the said moving vane (24) is articulated on a pivot (25) secured by a support (25a) to the door (7) and is connected by a system of link rods (32) to the end articulation of the rod of the control ram (8) on the door (7) so that when the door (7) moves, the vane (24) pivots about its pivot (25) so as to direct the reverse flow in an upstream direction.

12. Thrust reverser for a bypass turbojet engine according to Claim 8, in which the lateral support walls (26) connecting the vane (24) to the door (7) are mounted on a pivot (25) situated at an intermediate point between the upstream edge and the downstream edge and associated with an automatic mechanical return means (27).

13. Thrust reverser for a bypass turbojet engine according to any one of Claims 1 to 12, in which the suction face side (22b) of the vane (22; 24) faces towards the interior part (11) of the door (7).

14. Thrust reverser for a bypass turbojet engine according to any one of Claims 1 to 12, in which the suction face side (22b) of the vane (22; 24) faces towards the radially interior wall of the annular duct (21).

15. Thrust reverser for a bypass turbojet engine according to one of Claims 13 and 14, in which the leading edge (22a) of the vane (22; 24) is on the upstream side.

16. Thrust reverser for a bypass turbojet engine according to one of Claims 13 and 14, in which the leading edge (22a) of the vane (22; 24) is on the downstream side.

17. Thrust reverser for a turbojet engine according to Claim 1, in which the doors (7) are arranged at the downstream end of the flow duct and constitute downstream obstacles when operating in reverse thrust mode, at least one deflector vane (22) with a wing-shaped aerodynamic profile being fixed to the inner face of the said downstream obstacle (7).
